# EUROPÄISCHE PATENTSCHRIFT

(11) **EP 2 137 037 B1**
(45) Veröffentlichungstag und Bekanntmachung des Hinweises auf die Patenterteilung: **12.06.2013**
(21) Anmeldenummer: 08716368.9
(22) Anmeldetag: 07.03.2008
(51) Int. Cl.: B60T 17/00

(54) **DRUCKLUFTVERSORGUNGSEINRICHTUNG MIT VERBESSERTER REGENERATIONSFÄHIGKEIT**
COMPRESSED-AIR SUPPLY DEVICE WITH IMPROVED REGENERATION CAPACITY
DISPOSITIF D'ALIMENTATION EN AIR COMPRIMÉ À CAPACITÉ DE RÉGÉNÉRATION AMÉLIORÉE

(30) Priorität: 08.03.2007 DE 102007011256
(43) Veröffentlichungstag der Anmeldung: 30.12.2009
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Schönmann, Kurt
(86) Internationale Anmeldenummer: PCT/EP2008/001855
(87) Internationale Veröffentlichungsnummer: WO 2008/107207

(56) Entgegenhaltungen:
- WO-A-02/24505
- DE-A1- 3 140 455
- DE-A1- 3 636 142

## Beschreibung

Die Erfindung betrifft eine Druckluftversorgungseinrichtung für ein Nutzfahrzeug, mit einem Ventilgehäuse und einer Lufttrocknerpatrone, wobei der Lufttrocknerpatrone über das Ventilgehäuse Druckluft zuführbar ist, die die Lufttrocknerpatrone in einer ersten Strömungsrichtung durchströmt, und wobei in dem Ventilgehäuse ein elektrisch ansteuerbares Ventil vorgesehen ist, durch das zum Zwecke der Regeneration der Lufttrocknerpatrone eine Rückströmung von Druckluft durch die Lufttrocknerpatrone entgegen der ersten Strömungsrichtung veranlassbar ist.

Derartige Druckluftversorgungseinrichtungen beliefern Druckluftverbraucher in Nutzfahrzeugen mit aufbereiteter Druckluft. Typische Druckluftverbraucher sind beispielsweise ein pneumatisches Bremssystem oder eine Luftfederung. Eine Druckluftversorgungseinrichtung vereinigt zahlreiche Funktionen. Eine wichtige Aufgabe besteht in der Trocknung und Reinigung der Luft. Zu diesem Zweck ist eine Lufttrocknerpatrone vorgesehen, die Filtereinrichtungen und ein Trockenmittel enthält. Andere wichtige Aufgaben bestehen in der Druckregelung der von einem Kompressor gelieferten Druckluft, der sicheren Verteilung der Druckluft auf die verschiedenen Verbraucherkreise sowie der Regeneration der Lufttrocknerpatrone mittels einer Rückströmung von trockener Druckluft. Diese Aufgaben werden durch Ventileinrichtungen, die in einem Ventilgehäuse untergebracht sind, übernommen, nämlich einem Druckregler und einem Mehrkreisschutzventil. Moderne Druckluftversorgungseinrichtungen enthalten zusätzlich zu den pneumatischen Komponenten eine elektronische Steuerung sowie elektrisch ansteuerbare Komponenten, beispielsweise Magnetventile, und eine mit der elektronischen Steuerung in Verbindung stehende Sensorik. Die so ausgestatteten Druckluftversorgungseinrichtungen werden auch als EAC (Electronic Air Control) bezeichnet.

In der WO 02/24505 A1 wird eine Druckluftaufbereitungseinrichtung für Kraftfahrzeuge, mit einer elektronischen Steuervorrichtung und einer Regenerationseinrichtung beschrieben, wobei mittels der elektronischen Steuervorrichtung die Regenerationseinrichtung gesteuert wird. Ferner wird ein Verfahren zur Regeneration des Trocknungsmittels eines Lufttrockners einer Druckluftversorgungsanlage eines Kraftfahrzeugs beschrieben bei dem nach Ausstellen des Kraftfahrzeugs mittels der Steuervorrichtung die Regenerationseinrichtung derart steuerbar ist, dass ein Regenerationszyklus durchführbar ist.

Allgemein ist man bestrebt, die Lufttrocknung möglichst effektiv und effizient zu gestalten, wobei dies insbesondere eine gute Ausnutzung des in der Lufttrocknerpatrone zur Verfügung stehenden Volumens voraussetzt. Dies betrifft auch die Regenerationsfähigkeit des Systems, wobei die der Lufttrocknerpatrone zur Zwecke der Regeneration zugeführte trockene Luft in ausreichender Menge zur Verfügung gestellt werden muss.

Der Erfindung liegt die Aufgabe zugrunde, eine Druckluftversorgungseinrichtung mit verbesserter Regenerationsfähigkeit zur Verfügung zu stellen.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Druckluftversorgungseinrichtung dadurch auf, dass in dem Ventilgehäuse ein durch das elektrisch ansteuerbare Ventil pneumatisch an-steuerbares Ventil vorgesehen ist, über das der Lufttrocknerpatrone Druckluft zum Zwecke der Regeneration zuführbar ist. Bei herkömmlichen Druckluftversorgungseinrichtungen wird die der Lufttrocknerpatrone zum Zwecke der Regeneration zuzuführende Luft durch ein elektrisch ansteuerbares Ventil hindurchgeleitet, welches außerhalb der Regenerationsphasen eine Rückströmung von Druckluft verhindert. Unter Umständen kann eine große Rückströmrate während der Regenerationsphase erwünscht sein. Um einen solchen erhöhten Durchsatz durch das Regenerationsventil zu ermöglichen, müsste dieses vergrößert werden, sowohl was die baulichen Abmessungen angeht, als auch im Hinblick auf die elektrische Leistung. Dies ist unerwünscht, da bestehende Systeme im Hinblick auf ihre Ventilauslegung möglichst wenigen Veränderungen unterworfen werden sollen und da weiterhin einer das Magnetventil ansteuernden elektronischen Steuereinheit keine zusätzliche elektrische Leistung abverlangt werden soll. Diese Problematik wird dadurch gelöst, dass das Magnetventil auch bei erhöhtem Druckluftbedarf unverändert bleibt, das Magnetventil jedoch nicht mehr die Druckluft direkt zur Lufttrocknerpatrone durchsteuert, sondern vielmehr einen Steuereingang eines pneumatisch ansteuerbaren Ventils bedient. Dieses kann im Hinblick auf den Druckluftdurchsatz ohne weiteres erhöhten Anforderungen gerecht werden. Das pneumatisch ansteuerbare Ventil fungiert insofern als Boost-Ventil.

Nützlicherweise ist vorgesehen, dass das elektrisch ansteuerbare Ventil ein 3/2-Wegeventil ist. Hiermit können die Funktionen "Entlüften des pneumatischen Steuereingangs" und "Belüften des pneumatischen Steuereingangs" erfüllt werden. Weiterhin kann vorgesehen sein, dass das pneumatisch ansteuerbare Ventil ein 2/2-Wegeventil ist. Das Boost-Ventil hat eine ausreichende Funktionalität, wenn es die Rückströmung von Druckluft entweder gestatten oder unterbinden kann. Folglich ist ein 2/2-Wegeventil geeignet.

Nützlicherweise ist vorgesehen, dass in dem Gehäuse der Lufttrocknerpatrone eine mit Trockenmittel gefüllte Trockenmittelbox angeordnet ist und dass das Trockenmittel durch eine elastische Einrichtung komprimierbar ist. Die elastische Einrichtung stellt sicher, dass das als Granulat vorliegende Trockenmittel stets dicht gepackt ist, so dass die zu trocknende Luft die trocknende Wirkung des Granulats in optimaler Weise erfährt. Auch bei betriebsbedingten Volumenschwankungen des Trockenmittels sorgt die elastische Einrichtung dafür, dass die dichte Packung erhalten bleibt.

Gemäß einer besonders bevorzugten Ausführungsform der vorliegenden Erfindung ist vorgesehen, dass die Trockenmittelbox eine Basis aufeist, an der ein äußeres Rohrstück und ein inneres Rohrstück angeordnet sind, die an ihrer der Basis abgewandten Seite offen sind, und dass zwischen dem äußeren Rohrstück und dem inneren Rohrstück ein weiteres Rohrstück angeordnet ist, welches an seiner der Basis zugewandten Seite offen und durch die elastische Einrichtung relativ zu der Trockenmittelbox in axiale Richtung verschiebbar ist. Von außen zum Zentrum der Lufttrocknerpatrone liegen somit vier aufeinander folgende Wandungen vor, nämlich gebildet durch das Gehäuse der Lufttrocknerpatrone, das äußere Rohrstück der Trockenmittelbox, das weitere Rohrstück und das innere Rohrstück der Trockenmittelbox.

Hierdurch ist verwirklicht, dass das Gehäuse der Lufttrocknerpatrone, das äußere Rohrstück, das weitere Rohrstück und das innere Rohrstück ein Labyrinth bilden, das von zu trocknender Druckluft unter dreifacher Umkehr der Strömungsrichtung durchströmbar ist. Durch diese labyrinthartige Gestalt wird der Luftweg durch das Trockenmittel verlängert. Hierdurch kann die Trockenwirkung der Lufttrocknerpatrone verbessert werden, beziehungsweise es kann bei unveränderter Trockenwirkung eine Lufttrocknerpatrone mit geringerer Bauhöhe realisiert werden. Insbesondere bei einer labyrinthartigen Lufttrocknerpatrone besteht ein höherer Regenerationsluftbedarf als bei herkömmlichen Systemen. Folglich kommt die Erfindung in diesem Zusammenhang besonders vorteilhaft zum Zuge.

Es kann vorgesehen sein, dass die Trockenmittelbox mit dem Ventilgehäuse über eine radiale Dichtung abdichtend zusammenwirkt. Dies ist insbesondere bei so genannten offenen Systemen nützlich, bei denen die Lufttrocknerpatrone direkt am Ventilgehäuse abdichtet.

Bei geschlossenen Systemen, bei denen ein Fußflansch gegen das Ventilgehäuse abdichtet, ist vorgesehen, dass die Trockenmittelbox mit einem Fußflansch der Lufttrocknerpatrone über eine radiale Dichtung abdichtend zusammenwirkt.

Die Erfindung wird nun mit Bezug auf die begleitenden Zeichnungen anhand besonders bevorzugter Ausführungsformen beispielhaft erläutert.

Es zeigen:
- Figur 1: eine schematische Darstellung einer erfindungsgemäßen Druckluftversorgungseinrichtung;
- Figur 2: eine schematische Darstellung einer ersten Ausführungsform einer Regenerationsventileinrichtung;
- Figur 3: eine schematische Darstellung einer zweiten Ausführungsform einer Regenerationsventileinrichtung;
- Figur 4: eine erste Ausführungsform einer Druckluftversorgungseinrichtung in geschnittener Darstellung;
- Figur 5: eine erste Ausführungsform einer Druckluftversorgungseinrichtung in geschnittener Explosionsdarstellung;
- Figur 6: eine Schnittansicht eines Teils einer Druckluftversorgungseinrichtung mit einem Sicherungselement;
- Figur 7: eine perspektivische Darstellung eines Außenbajonettrings;
- Figur 8: eine Draufsicht eines Außenbajonettrings;
- Figur 9: eine zweite Ausführungsform einer Druckluftversorgungseinrichtung in geschnittener Darstellung;
- Figur 10: eine perspektivische Darstellung eines Innenbajonettrings;
- Figur 11: eine Draufsicht eines Innenbajonettrings;
- Figur 12: eine dritte Ausführungsform einer Druckluftversorgungseinrichtung in geschnittener Darstellung;
- Figur 13: eine perspektivische Darstellung einer Lufttrocknerpatrone mit Fußflansch und Innenbajonettring;
- Figur 14: eine perspektivische Darstellung eines Innenbajonettrings mit Fußflanschfunktion;
- Figur 15: eine Schnittansicht eines Teils einer Druckluftversorgungseinrichtung zur Erläuterung einer ersten Montageart eines Fußflansches;
- Figur 16: eine Schnittansicht eines Teils einer Druckluftversorgungseinrichtung zur Erläuterung einer zweiten Montageart eines Fußflansches;
- Figur 17: einen Teil einer Druckluftversorgungseinrichtung in geschnittener Darstellung;
- Figur 18: einen Teil einer Trockenmittelbox in perspektivischer Darstellung;
- Figur 19: eine perspektivische geschnittene Darstellung eines Teils einer erfindungsgemäßen Lufttrocknerpatrone und
- Figur 20: eine Trockenmittelbox in perspektivischer Darstellung.

Bei der nachfolgenden Beschreibung der Zeichnungen bezeichnen gleiche Bezugszeichen gleiche oder vergleichbare Komponenten.

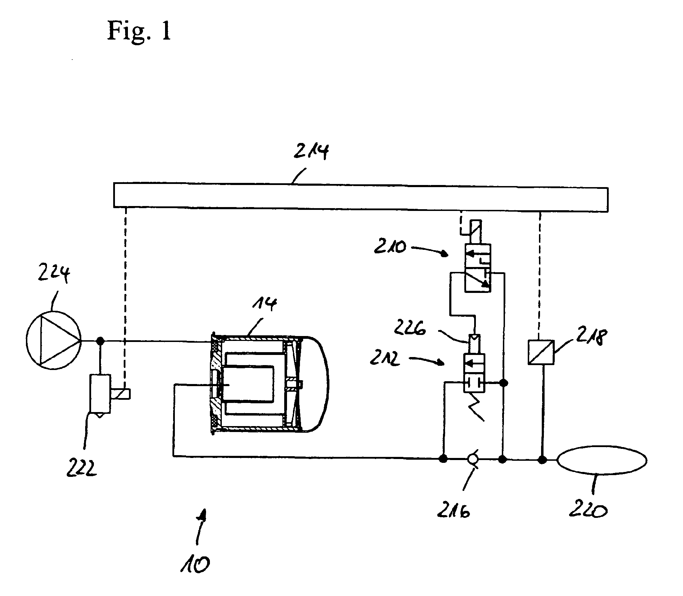

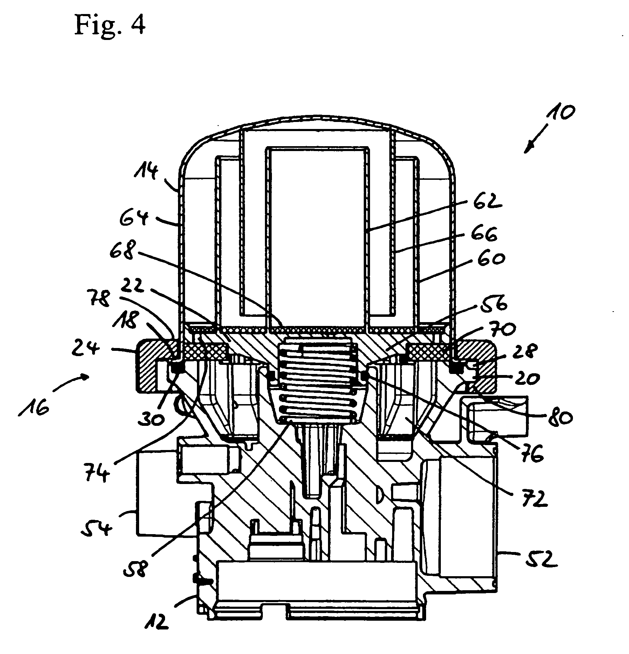

Figur 1 zeigt eine schematische Darstellung einer erfindungsgemäßen Druckluftversorgungseinrichtung. Die Druckluftversorgungseinrichtung 10 umfasst eine Lufttrocknerpatrone 14, die auf ein Ventilgehäuse (siehe Figur 4 ff.) aufsetzbar ist. Dieses Ventilgehäuse weist eine Vielzahl von Ventilen auf, die pneumatisch oder elektrisch ansteuerbar sind. Die für die vorliegende Erfindung besonders wesentlichen Ventile sind in Figur 1 gezeigt, nämlich ein elektrisch ansteuerbares 3/2-Wegeventil 210 und ein pneumatisches ansteuerbares 2/2-Wegeventil 212. Das elektrisch ansteuerbare Ventil 210 wird von einer elektronischen Steuereinheit 214 angesteuert, welche eine Vielzahl von Steuer- und Regelfunktionen der Druckluftversorgungseinrichtung bewirken kann. Es sind ferner ein Rückschlagventil 216, das von dem pneumatisch ansteuerbaren 2/2-Wegeventil 212 überbrückbar ist, und ein mit der elektronischen Steuereinheit 214 verbundener Drucksensor 218 vorgesehen, wobei der Drucksensor 218 den Druck in einem der Druckluftversorgungseinrichtung nachgeschalteten Druckluftbehälter 220 erfasst. Weiterhin ist ein elektrisch ansteuerbares Ablassventil 222 vorgesehen. Der Druckluftversorgungseinrichtung 10 ist ein Kompressor 224 vorgelagert.

Während des Förderbetriebs des Kompressors 224 ist das Ablassventil 222 normalerweise geschlossen. Demzufolge wird Druckluft über das Ventilgehäuse in die Lufttrocknerpatrone 14 gefördert, dort gereinigt und getrocknet, um dann aus der Lufttrocknerpatrone 14 über das Rückschlagventil 216 den Druckluftverbrauchern zugeführt zu werden, wofür der Druckluftbehälter 220 beispielhaft dargestellt ist. Die Druckluftversorgung der verschiedenen Verbraucherkreise erfolgt dabei nützlicherweise über ein Mehrkreisschutzventil. Während der Regeneration der Druckluftversorgungseinrichtung wird der Kompressor 224 mittels Trennen einer Kupplung oder durch ein Überführen in eine Leerlaufstellung außer Kraft gesetzt, und das Ablassventil 222 wird geöffnet, indem es von der Steuereinheit 214 elektrisch angesteuert wird. Das Ablassventil kann auch rein pneumatisch ausgelegt sein. Ebenfalls wird das 3/2-Wegeventil von der elektrischen Steuereinheit 214 umgeschaltet, so dass der Steuereingang 226 des 2/2-Wegeventils 212 mit Druck beaufschlagt wird. Der Steuerdruck wird bezüglich des Rückschlagventils 216 verbraucherseitig abgezweigt. Ein Umschalten des 2/2-Wegeventils 212 hat zur Folge, dass getrocknete Druckluft aus den Behältern 220 über das 2/2-Wegeventil 212 unter Umgehung des Rückschlagventils 216 durch die Lufttrocknerpatrone 14 hindurchströmt. Die rückströmende Druckluft verlässt dann durch das Ablassventil 222 das System.

Während bei herkömmlichen Systemen die nun als Steuerdruckluft verwendete Druckluft des 3/2-Wegeventils 210 direkt als Regenerationsluft verwendet wird, wird nun die von einem pneumatischen Ventil gesteuerte Druckluft verwendet, wodurch ein höherer Druckluftbedarf befriedigt werden kann, insbesondere im Hinblick auf die nachfolgend beschriebenen (Fig. 4 ff.) labyrinthartigen Ausführungsformen von Lufttrocknerpatrone.

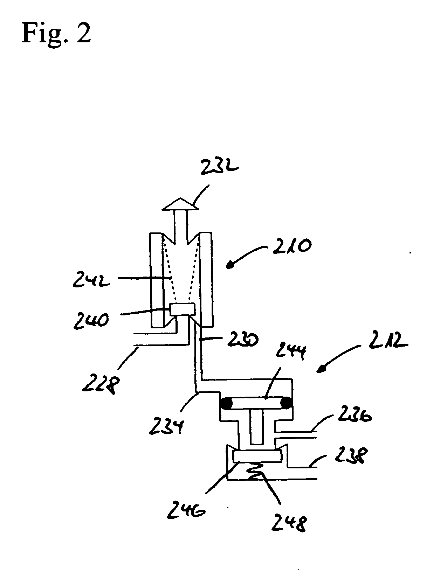

Figur 2 zeigt eine schematische Darstellung einer ersten Ausführungsform einer Regenerationsventileinrichtung. Das 3/2-Wegeventil 210 ist als Sitzventil mit einem ersten Anschluss 228, einem zweiten Anschluss 230 und einer Entlüftung 232 ausgestaltet. Das 2/2-Wegeventil 212 ist ebenfalls als Sitzventil realisiert, wobei ein Steuereingang 234, der mit dem Anschluss 230 des 3/2-Wegeventils 210 in Verbindung steht, und zwei weitere Anschlüsse 236, 238 vorgesehen sind. Der in Figur 2 dargestellte Zustand liegt während der Förderphase des Kompressors vor. Das 3/2-Wegeventil 210 ist stromlos, und ein Ventilteller 240 wird durch eine Feder 242 auf einem dem Druckluftanschluss 228 zugeordneten Ventilsitz gedrückt. Folglich ist der Steuereingang 224 des 2/2-Wegeventils 212 entlüftet, und die Anschlüsse 236, 238 des 2/2-Wegeventils 212 stehen nicht miteinander in Verbindung. Wird das 3/2-Wegeventil 210 umgeschaltet, so verschließt der Ventilteller 240 gegen die Kraft der Feder 242 den der Entlüftung 232 zugewandten Ventilsitz. Folglich gelangt Druckluft über den Anschluss 228, der den Druckluftbehältern 220 (siehe Figur 1) zugewandt ist, und über den Anschluss 230 zu dem Steuereingang 234 des 2/2-Wegeventils 212. Hierdurch wird der Steuerkolben 244 des 2/2-Wegeventils verschoben, so dass er den Ventilteller 246 gegen die Kraft der Feder 248 von seinem Sitz abhebt. Dies hat eine Verbindung der Anschlüsse 236, 238 des 2/2-Wegeventils zufolge. Sind zum Beispiel der Anschluss 236 mit den Druckluftbehältern 220 und der Anschluss 238 mit der Lufttrocknerpatrone 14 verbunden, so erfolgt eine Rückströmung von Druckluft vom Anschluss 236 über den Anschluss 238 zur Lufttrocknerpatrone.

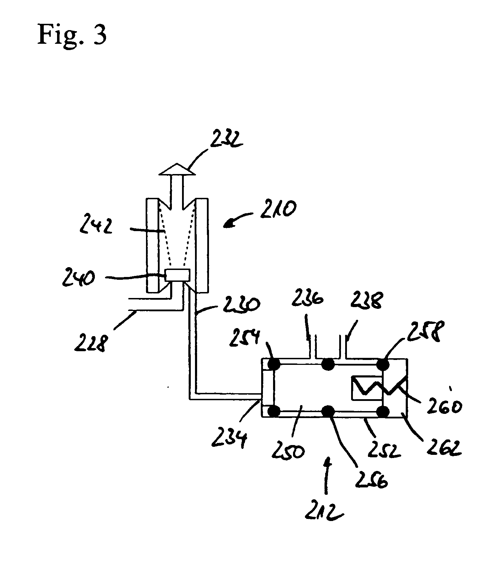

Figur 3 zeigt eine schematische Darstellung einer zweiten Ausführungsform einer Regenerationsventileinrichtung. Im Hinblick auf das 3/2-Wegeventil 210 ist die Ausführungsform gemäß Figur 3 identisch zu der Ausführungsform gemäß Figur 2. Das 2/2-Wegeventil 212 ist vorliegend jedoch als Kolbenventil ausgebildet. Ein Kolben 250 wird in einem Ventilgehäuse 252 geführt, wobei drei Dichtungen 254, 256 und 258 vorgesehen sind. Im dargestellten Zustand, bei dem der Steuerraum 234 des 2/2-Wegeventils 212 entlüftet ist, sorgt die Feder 260 dafür, dass sich der Kolben 250 in einer Position befindet, in der die Dichtung 256 die Anschlüsse 236, 238 voneinander trennt. Die Dichtung 254 trennt den Steuereingang 234 von dem Anschluss 236. Die Dichtung 258 trennt den Rückraum 262 des Kolbens 250, in dem sich die Feder 260 befindet, von dem Anschluss 238. Um eine Verschiebung des Kolbens 250 zu ermöglichen, ist der Rückraum 262 mit der Atmosphäre verbunden. Wird der Steuereingang 234 des 2/2-Wegeventils 212 nun durch Umschalten des 3/2-Wegeventils 210 mit Druck beaufschlagt, so verschiebt sich der Kolben 250 gegen die Kraft der Feder 260 in dem Maße, dass die Dichtung 256 die Anschlüsse 236, 238 nicht mehr trennt. Diese sind folglich verbunden, und sie können so eine Rückströmung von Druckluft durch die Lufttrocknerpatrone zulassen.

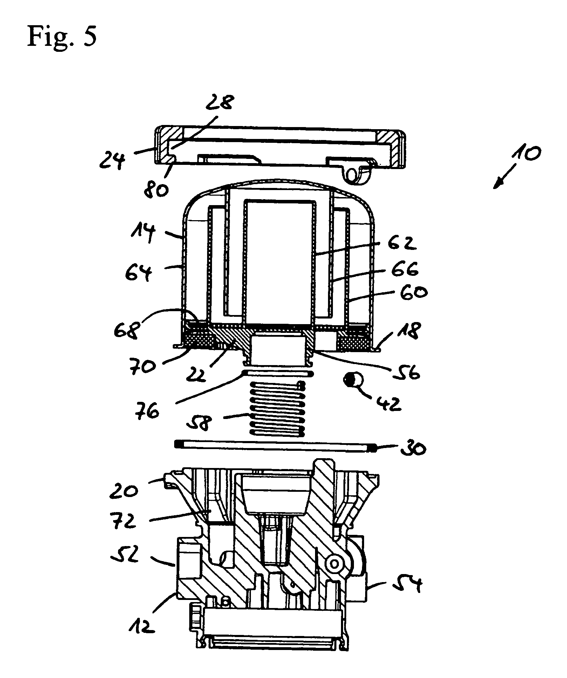

Figur 4 zeigt eine erste Ausführungsform einer Druckluftversorgungseinrichtung in geschnittener Darstellung. Figur 5 zeigt eine erste Ausführungsform einer Druckluftversorgungseinrichtung in geschnittener Explosionsdarstellung.

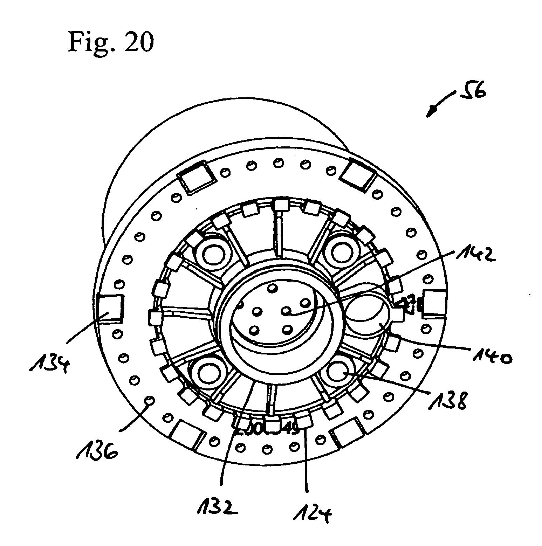

Die Druckluftversorgungseinrichtung 10 weist ein Ventilgehäuse 12 und eine Lufttrocknerpatrone 14 auf. Das Ventilgehäuse 12 hat einen Eingang 52, an dem ein Kompressor anschließbar ist und über den aufzubereitende Druckluft einströmen kann. Weiterhin ist ein Ausgang 54 zur Weiterleitung der aufbereiteten Druckluft vorgesehen. In der Lufttrocknerpatrone 14 ist eine vorzugsweise aus Kunststoff bestehende Trockenmittelbox 56 angeordnet, die in das Ventilgehäuse 12 hineinragt und an diesem über eine Feder 58 abgestützt ist. Die Trockenmittelbox 56 umfasst eine Basis 22, ein äußeres Rohrstück 60 und ein inneres Rohrstück 62, die sich in die Lufttrocknerpatrone 14 hinein erstrecken. Zwischen den Rohrstücken 60, 62 ist ein am Gehäuse 64 der Lufttrocknerpatrone 14 befestigtes, vorzugsweise aus Metall bestehendes weiteres Rohrstück 66 angeordnet, welches in Richtung des Ventilgehäuses 12 offen ist, während die Rohrstücke 60, 62 der Trockenmittelbox 56 in die entgegensetzte Richtung geöffnet sind. Die Verbindung des Rohrstückes 66 mit dem Gehäuse 64 kann nützlicherweise durch Punktschweißen erfolgen, wobei eine zusätzliche Abdichtung vorgesehen ist, beispielsweise durch aushärtendes Material. Durch die so ineinander angeordneten Rohrstücke 60, 62, 66 sowie das Gehäuse 64 wird ein Labyrinth gebildet, das vollständig mit Granulat zum Trocknen der das Labyrinth durchströmenden Druckluft gefüllt ist. Die dichte Packung des Trockenmittels in der Lufttrocknerpatrone 14 wird durch die von der Feder 58 vermittelte Kraft aufgebracht, welche die Trockenmittelbox 56 in die Lufttrocknerpatrone 14 hineintreibt. Der von Trockenmittel erfüllte Raum ist in Richtung des Ventilgehäuses 12 zumindest teilweise durch Filtervlies 68 begrenzt, wobei die einzelnen durch die Rohrstücke 60, 62, 66 abgegrenzten Bereiche des Filtervlieses 68 aus identischen oder verschiedenen Materialien bestehen können. Insbesondere der äußere Bereich des Filtervlieses 68 zwischen dem Rohrstück 60 und dem Gehäuse 64 der Lufttrocknerpatrone 14 und der zentrale Bereich des Filtervlieses 68 innerhalb des inneren Rohrstückes 62 sind als Staubfilter ausgelegt, während der zwischen dem äußeren Rohrstück 60 und dem inneren Rohrstück 62 angeordnete Vliesbereich für die Aufnahme und bedarfsweise Abgabe von Fremdstoffen ausgelegt ist, die über Rückschlagventile (siehe Figur 20) aus der Trockenmittelbox 56 austreten können. Im Bereich der unteren Begrenzung der Lufttrocknerpatrone 14 ist weiterhin ein Vorfilter 70 angeordnet, der optional die Eigenschaften eines Koaleszenzfilters aufweisen kann. Der Vorfilter 70 dient insbesondere der Reinigung der Druckluft im Hinblick auf Kompressoröl und vergleichbare Verschmutzungen.

In das Ventilgehäuse 12 über den Eingang 52 einströmende Druckluft wird über Kanäle im Ventilgehäuse 12 verteilt, um dann über den Kanal 72 den Vorfilter 70 anzuströmen und durch diesen hindurch zu treten. Im Anschluss daran strömt die Druckluft durch den Kanal 74 und nachfolgend durch den Filtervlies 68 in das dichtgepackte Trockenmittel ein. Die Luft strömt in der Lufttrocknerpatrone bis über das offene Ende des äußeren Rohrstückes 60 der Trockenmittelbox 56 hinaus, und sie wird dann umgelenkt, um zwischen dem äußeren Rohrstück 60 und dem am Gehäuse 64 des Lufttrockners befestigten Rohrstück 66 wieder in Richtung Ventilgehäuse 12 zu strömen. Nachdem die Druckluft das offene Ende des Rohrstückes 60 passiert hat, wird diese wiederum umgelenkt, um nachfolgend zwischen dem am Gehäuse 64 der Lufttrocknerpatrone 14 befestigten Rohrstück 66 und dem inneren Rohrstück 62 sowie über das Ende dieses Rohrstückes 62 hinaus zu strömen. Dort wird die Luft wiederum umgelenkt, um dann zentral durch das innere Rohrstück 62 und den Filtervlies 68 aus der Lufttrocknerpatrone 14 und der Trockenmittelbox 56 wieder in das Ventilgehäuse 12 einzuströmen. Die Luft wird in dem Ventilgehäuse 12 über Kanäle gesammelt und ist dann über den Ausgang 54 entnehmbar.

Um die so geschilderte Luftführung zu ermöglichen, ist eine Abdichtung der Trockenmittelbox 56 gegen das Ventilgehäuse 12 mittels einer Dichtung 76 erforderlich, die hier als radial wirkende Dichtung, insbesondere als O-Ring ausgebildet ist. Weiterhin ist eine axial wirkende Dichtung 30 vorgesehen, die einen Kragen 18 des Gehäuses 64 der Lufttrocknerpatrone 14 gegen das Ventilgehäuse 12 abdichtet. Um die für die Abdichtung erforderliche Kompression der Dichtung 30 zur Verfügung zu stellen, ist ein Bajonettverschluss 16 vorgesehen, der das Ventilgehäuse 12 und die Lufttrocknerpatrone 14 zusammenhält. Der Bajonettverschluss 16 umfasst einen Außenbajonettring 26 mit inneren abschnittsweise gebildeten Ausnehmungen 28, die durch Vorsprünge 80 und einen in Umfangsrichtung durchgehenden Kragen 78 gebildet sind. Diese inneren Ausnehmungen 28 sind geeignet, Kragenabschnitte 20 des Ventilgehäuses 12 aufzunehmen und mit diesen über jeweils abgeschrägte Flächen durch Verdrehen des Außenbajonettrings 24 gegen das Ventilgehäuse 12 eine axiale Kraft aufzubringen, welche den Kragen 18 der Lufttrocknerpatrone 14 über die Dichtung 30 gegen das Ventilgehäuse 12 presst. Der in Umfangsrichtung durchgehende Kragen 78 des Außenbajonettrings 24 wirkt somit mit dem in Umfangrichtung durchgehenden Kragen 18 der Lufttrocknerpatrone 14 zusammen, während die Kragenabschnitte 20 des Ventilgehäuses mit den Vorsprüngen 80 des Außenbajonettrings 24 über deren geneigte Flächen zusammenwirken und somit bei relativer Drehung die Charakteristik eines Bajonettverschlusses zu Verfügung stellen. In der Explosionsdarstellung gemäß Figur 5 ist weiterhin ein Sicherungselement zu erkennen, das mit Bezug auf die nachfolgende Figur näher erläutert wird.

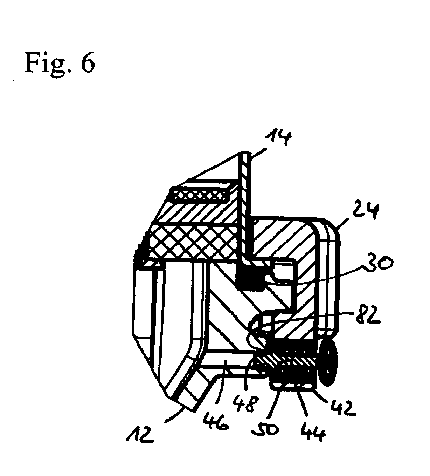

Figur 6 zeigt eine Schnittansicht eines Teils einer Druckluftversorgungseinrichtung mit einem Sicherungselement. Das Sicherungselement 42 sitzt in einer Öffnung 44 des Außenbajonettrings 24 und ist mit diesem dort fest verbunden. In dem in Figur 6 dargestellten Zustand dringt eine Nase 48 des Sicherungselementes 42 in eine Öffnung 46 des Ventilgehäuses ein, die mit den Druckluftführungen im Ventilgehäuse 12 in Verbindung steht. Die Nase 48 des Sicherungselements 42 trägt eine Dichtung 82, so dass im dargestellten Zustand ein Abströmen von Druckluft verhindert wird. Soll der Außenbajonettring 24 zum Öffnen des Bajonettverschlusses 16 gegen das Ventilgehäuses 12 verdreht werden, so ist es zunächst erforderlich, das Sicherungselement 42 aus der Öffnung 46 gegen die Kraft einer Feder 50 nach außen zu ziehen. Nach Freigabe der Öffnung 46 kann dann die Druckluft aus dem System abströmen; gleichzeitig ist die Drehbewegung des Außenbajonettrings 24 gegen das Ventilgehäuse 12 freigegeben. Beim Schließen des Bajonettverschlusses 16 wird der Außenbajonettring 24 so lange gegen das Ventilgehäuse 12 in Schließrichtung gedreht, bis die Nase 48 wieder in die Öffnung 46 einrastet und diese abdichtet. Ist das Einrasten hörbar, so liegt gleichzeitig für den Fahrer eine Bestätigung für die korrekte Montage der Druckluftversorgungseinrichtung 10 vor. Da eine Öffnung 46 zum Abströmen von Druckluft nur an einer Umfangsposition des Ventilgehäuses 12 vorhanden sein wird, ist sicherzustellen, dass der Außenbajonettring 24 nur in genau einer Position über die miteinander zu verbindenden Krägen geführt werden kann, beispielsweise durch mechanische Führungen, damit beim Schließen dann auch das Sicherungselement 42 und die Öffnung 46 aufeinander treffen.

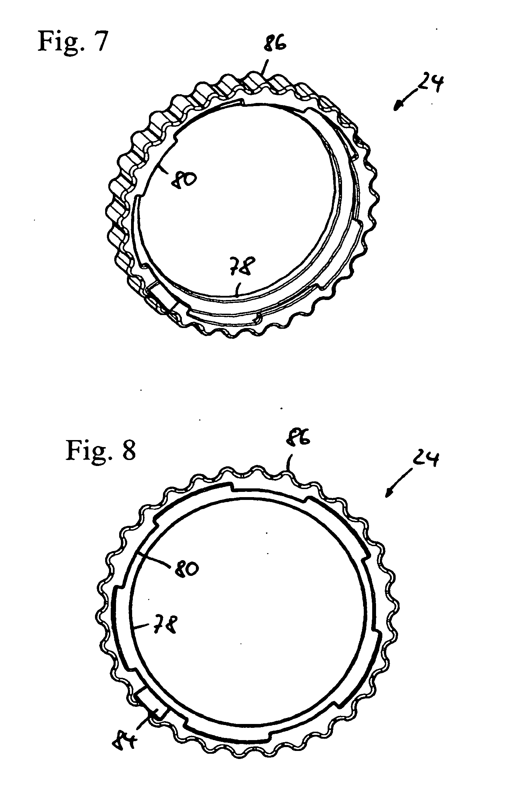

Figur 7 zeigt eine perspektivische Darstellung eines Außenbajonettrings. Figur 8 zeigt eine Draufsicht eines Außenbajonettrings. Der Außenbajonettring hat an seiner Außenseite eine gewellte Oberfläche 86, was die Handhabbarkeit beim Schließen und Öffnen verbessert. An der Innenseite des Außenbajonettrings 24 sind der vorspringende Kragen 78, der auf dem Kragen 18 der Lufttrocknerpatrone 14 zu liegen kommt, sowie die Vorsprünge 80 erkennbar, die mit den Abschnitten 20 des Ventilgehäuses zusammenwirken. Weiterhin ist der Sicherungselementhalter 84 erkennbar. In Figur 7 ist erkennbar, dass die Vorsprünge 80 von einem Endbereich zum anderen in ihrer Dicke zunehmen, wobei zusätzlich noch eine stärkere Anlaufschräge am dünneren Endbereich vorgesehen ist. Die Anlaufschräge kann beispielsweise eine Neigung von 30° haben, während die nachfolgende Fläche eine Steigung von beispielsweise 1,5° hat.

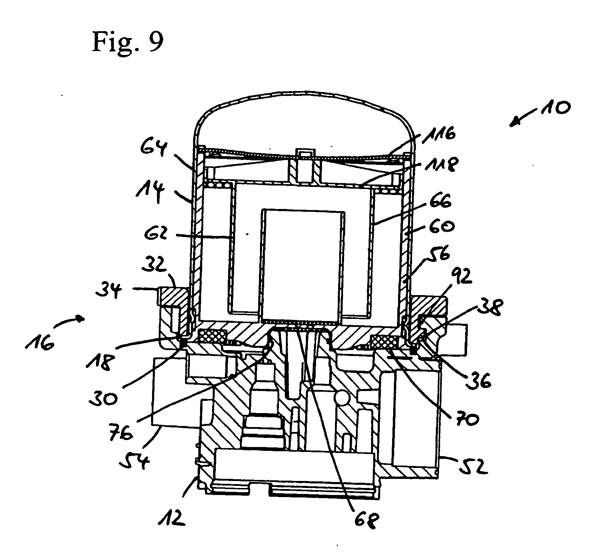

Figur 9 zeigt eine zweite Ausführungsform einer Druckluftversorgungseinrichtung in geschnittener Darstellung. Anders als bei der bisher beschriebenen Ausführungsform enthält der die Lufttrocknerpatrone 14 mit dem Ventilgehäuse 12 verbindende Bajonettverschluss 16 einen Innenbajonettring 32. Der Innenbajonettring 32 ist über die Lufttrocknerpatrone 14 geführt und über Rastnasen 90 an der Innenfläche des Innenbajonettrings 32 und entsprechende Ausnehmungen 88 am Gehäuse 64 der Lufttrocknerpatrone gegen diese verdrehgesichert. Der Innenbajonettring 32 hat einen sich nach außen erstreckenden Kragen 34 und dazu axial versetzte, sich nach außen erstreckende Vorsprünge 36. Die Vorsprünge 36 weisen Schrägen auf, die in Ausnehmungen 38 eines teilweise außerhalb des Innenbajonettrings 32 liegenden Teils des Ventilgehäuses 12 eingreifen, um mit dem die Ausnehmungen 38 einseitig begrenzenden sich radial nach innen erstreckenden Vorsprüngen 92 zusammenzuwirken. Zu diesem Zweck weisen die Vorsprünge 92 ebenfalls Schrägen auf, die eine kraftschlüssige Verbindung zwischen den Vorsprüngen 92 des Ventilgehäuses 12 und den Vorsprüngen 36 des Innenbajonettrings 32 durch eine relative Drehung von Innenbajonettring 32 und Ventilgehäuse 12 zur Verfügung stellt. Durch das Verschließen des Bajonettverschlusses 16 entsteht eine axial wirkende Kraft, die über den Kragen 18 der Lufttrocknerpatrone 14 auf eine Dichtung 30 wirkt; diese Dichtung wirkt andererseits mit dem Ventilgehäuse 12 zusammen. Eine weitere Dichtung 76 ist als Radialdichtung ausgebildet, d. h. insbesondere als O-Ring. Sie dichtet das Ventilgehäuse 12 gegen die vorzugsweise aus Kunststoff bestehende Trockenmittelbox 56 ab.

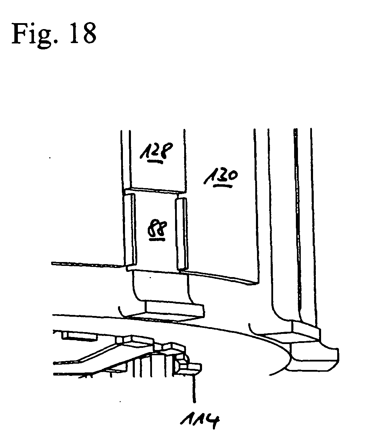

Mit dem so aufgebauten und gedichteten System ist wiederum eine effiziente und effektive Lufttrocknung möglich, indem über den Eingang 52 des Ventilgehäuses 12 Druckluft einströmt, sich über Luftkanäle im Ventilgehäuse 12 verteilt und über einen vorzugsweise als Koaleszenzfilter ausgebildeten Vorfilter 70 in die Lufttrocknerpatrone 14 bzw. die darin angeordnete Trockenmittelbox 56 strömt. Die Trockenmittelbox 56 umfasst wiederum ein äußeres nach oben offenes Rohrstück 60 und ein inneres nach oben geöffnetes Rohrstück 62 auf. Zwischen dem äußeren Rohrstück 60 und dem inneren Rohrstück 62 ist ein weiteres Rohrstück 66 angeordnet, das nach unten offen ist und vorzugsweise aus Metall besteht. Dieses metallische Rohrstück 66 wird von einer Kompressionseinrichtung 118 gehalten, die von einer Federeinrichtung 116 mit Kraft beaufschlagt wird. Durch diese Federkraft wird das in der Trockenmittelbox vorgesehene als Trockenmittel wirkende Granulat dicht gepackt. Die aus dem Vorfilter 70 ausströmende Luft strömt außerhalb des äußeren Rohrstückes 60, d. h. zwischen dem äußeren Rohrstück 60 und dem Gehäuse 64 der Lufttrocknerpatrone 14 durch nicht dargestellte axiale Kanäle, die zwischen den zu erkennenden Anlagebereichen der Trockenmittelbox 56 angeordnet sind, nach oben. Zur weiteren Veranschaulichung dieser Luftführungen wird auf Figur 18 hingewiesen. Die Luft umströmt das offene Ende des äußeren Rohrstücks 60, tritt in den trockenmittelfreien Raum oberhalb der Kompressionseinrichtung 118 ein und strömt nachfolgend zwischen dem nach unten geöffneten Rohrstück 66 und dem äußeren Rohrstück 60 nach unten, um dann wiederum seine Strömungsrichtung umzukehren und zwischen dem inneren Rohrstück 62 und dem nach unten geöffneten Rohrstück 66 nach oben zu strömen. Nach nochmaliger Strömungsumkehr strömt die zu trocknende Luft dann in das innere Rohrstück 62 ein, um dieses dann nach unten durch einen als Staubfilter wirkenden Filtervlies 68 in das Ventilgehäuse 12 zu verlassen. Getrocknete Luft wird dann über den Ausgang 54 abgeführt.

Die Trockenmittelbox 56 und der freie Bereich zwischen Trockenmittelbox 56 und Gehäuse 64 sind vollständig mit Granulat gefüllt. Dieses kann einheitlich ausgebildet sein. Besonders nützlich kann auch sein, verschiedene Arten von Trockenmittel in die Trockenmittelbox 56 einzubringen. So kann das anfänglich durchströmte Trockenmittel für eher feuchte Luft optimiert sein, während das Trockenmittel im Ausströmbereich für die Restentfeuchtung schon vorgetrockneter Luft optimiert ist.

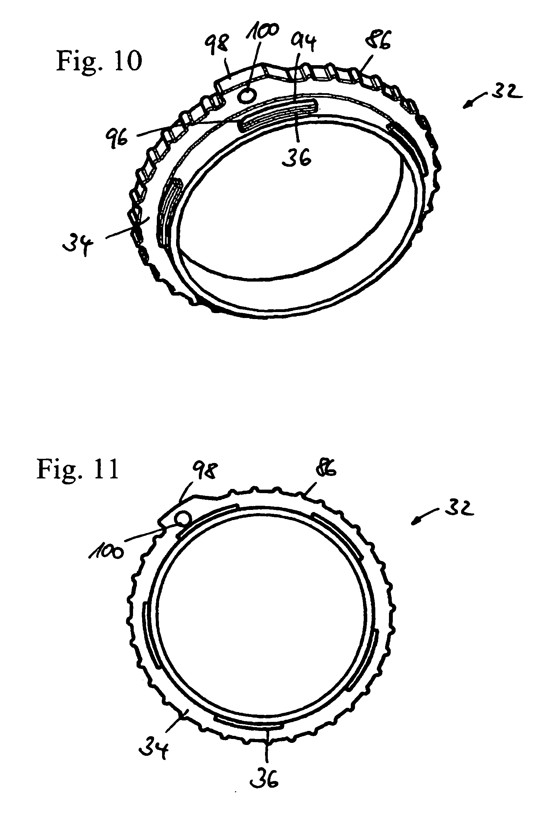

Figur 10 zeigt eine perspektivische Darstellung eines Innenbajonettrings. Figur 11 zeigt eine Draufsicht eines Innenbajonettrings. Der Innenbajonettring 32 hat eine gewellte äußere Oberfläche 86, was die Handhabbarkeit beim Verdrehen des Innenbajonettrings 32 verbessert. Die gewellte äußere Oberfläche ist am nach außen gerichteten Kragen 34 des Innenbajonettrings 32 angeordnet. Axial versetzt zum Kragen 34 sind Vorsprünge 36 vorgesehen, die ebenfalls nach außen gerichtet sind, und die für die Bajonettfunktion erforderliche Neigung der dem Kragen 34 zugewandten Oberfläche 94 aufweisen. Diese Neigung kann beispielsweise 1,5° betragen. Zur Erleichterung der anfänglichen Drehbewegung beim Verschließen des Bajonettverschlusses sind Anlaufschrägen 96 vorgesehen, die eine deutlich größere Neigung aufweisen, beispielsweise 30°. Die Vorsprünge 36 können vorteilhafterweise einen Anschlag aufweisen, um die Schließbewegung des Bajonettverschlusses zu begrenzen. An einem Ansatz 98 am Kragen 34 ist eine axiale Bohrung 100 zu erkennen, die zur Aufnahme des im Zusammenhang mit Figur 6 detailliert beschriebenen Sicherungselementes 42 aufweist. Bei der Anwendung sitzt das Sicherungselement 42 fest in dieser Bohrung 100, um mit seiner Nase dann in eine das Abströmen von Druckluft aus der Druckluftversorgungseinrichtung 10 ermöglichende Bohrung im Ventilgehäuse 12 einzurasten. Somit wird auch im Zusammenhang mit der Innenbajonettlösung die vorteilhafte Kombination aus Druckluftablasseinrichtung und Rasteinrichtung zur Verfügung gestellt.

Die im Zusammenhang mit den Figuren 4 bis 11 beschriebenen Ausführungsformen der vorliegenden Erfindung enthalten Lufttrocknerpatronen die als offene Systeme ausgelegt sind. Dies bedeutet, dass die Lufttrocknerpatrone direkt am Ventilgehäuse über eine Dichtung abdichtet, das heißt insbesondere ohne zwischengelagerten Flansch.

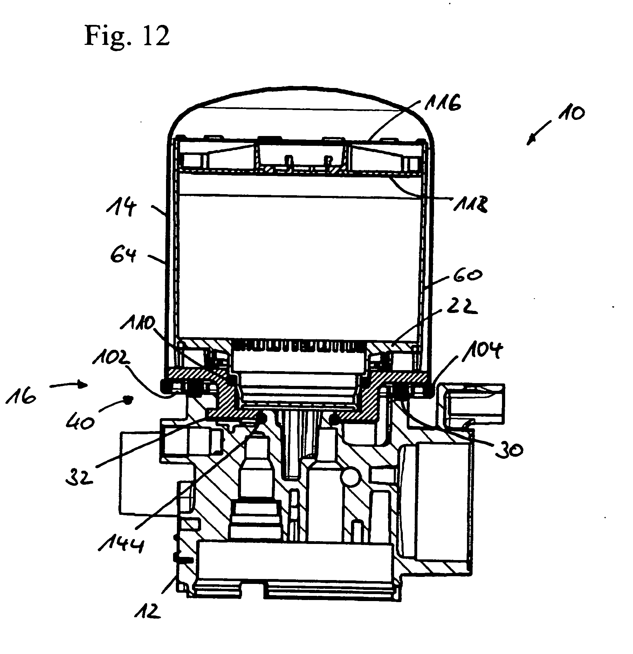

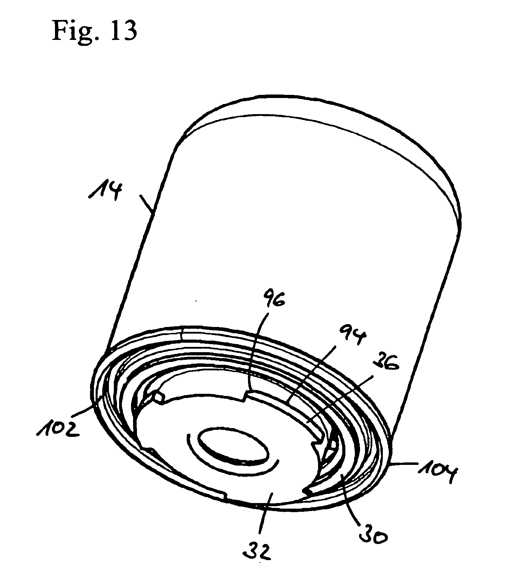

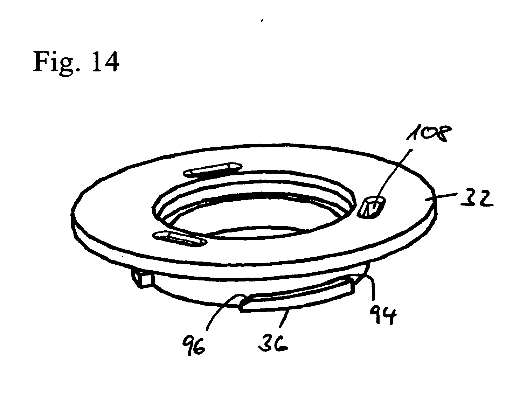

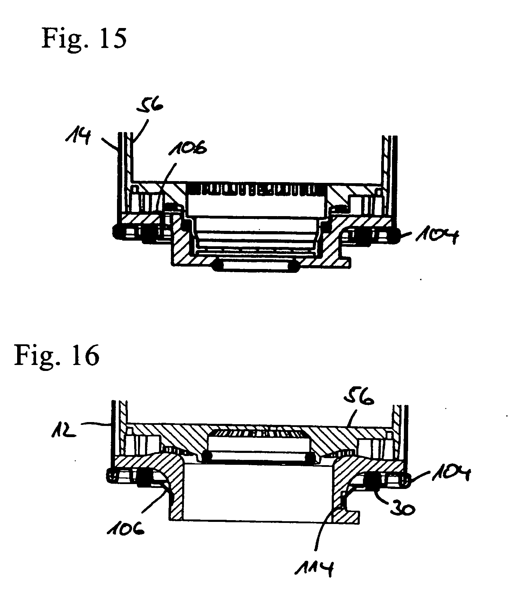

Figur 12 zeigt eine dritte Ausführungsform einer Druckluftversorgungseinrichtung in geschnittener Darstellung. Figur 13 zeigt eine perspektivische Darstellung einer Lufttrocknerpatrone mit Fußflansch und Innenbajonettring. Figur 14 zeigt eine perspektivische Darstellung eines Innenbajonettrings mit Fußflanschfunktion. Figur 15 zeigt eine Schnittansicht eines Teils einer Druckluftversorgungseinrichtung zur Erläuterung einer ersten Montageart eines Fußflansches und Figur 16 zeigt eine Schnittansicht eines Teils einer Druckluftversorgungseinrichtung zur Erläuterung einer zweiten Montageart eines Fußflansches. Das in diesen Figuren dargestellte System enthält eine geschlossene Lufttrocknerpatrone 14. Von geschlossenen Lufttrocknerpatronen 14 ist die Rede, wenn deren Gehäuse 64 nicht direkt am Ventilgehäuse 12 abdichtet, sondern ein Fußflansch 40 vorgesehen ist. Der Fußflansch 40 ist mit einem Innenbajonettring 32 kombiniert, der im Hinblick auf seine die Bajonettwirkung zur Verfügung stellende Ausgestaltung mit dem im Zusammenhang mit den Figuren 9 bis 11 beschriebenen Innenbajonettring vergleichbar. Ebenso weist das Ventilgehäuse 12 bezogen auf den Bajonettverschluss 16 eine vergleichbare Ausgestaltung auf, wie das im Zusammenhang mit Figur 9 beschriebene Ventilgehäuse 12. Der Innenbajonettring 32 ist über einen Deckel 102 mit dem Gehäuse 64 der Lufttrocknerpatrone 14 verbunden. Die Verbindung des Deckels 102 mit dem Gehäuse 64 der Lufttrocknerpatrone erfolgt über einen Bördelrand 104. Der Fußflansch 40 wirkt über eine Dichtung 30, die an dem Deckel 102 anliegt, mit dem Ventilgehäuse 12 zusammen, wobei die abdichtende Kraft in axiale Richtung wirkt. Eine weitere radial wirkende Dichtung 144 ist zwischen dem Ventilgehäuse 12 und dem Innenbajonettring 32 vorgesehen. Ebenfalls ist eine Radialdichtung 110 zwischen der Trockenmittelbox 56 und dem Innenbajonettring 32 angeordnet. Das so aufgebaute und abgedichtete System ermöglicht ein Einströmen von Druckluft in den Eingang 52, eine Überleitung der Druckluft in den Bereich zwischen der Trockenmittelbox 56 und dem Gehäuse 64 der Lufttrocknerpatrone 14, eine Umlenkung der Luft in den zentralen mit Trockenmittel gefüllten Bereich 112 der Trockenmittelbox 56 und ein nachfolgendes Abströmen der getrockneten Luft aus der Lufttrocknerpatrone 14 in das Ventilgehäuse 12, aus dem die getrocknete Luft dann über den Ausgang 54 entnommen werden kann. Die Kompression des in der Trockenmittelbox 56 vorhandenen Trockenmittels erfolgt über eine eine Kompressionseinrichtung 118 beaufschlagende Federeinrichtung.

Gemäß den Figuren 14 und 15 erfolgt die Verbindung des Deckels 102 mit dem Innenbajonettring 32 durch das Eingreifen von Laschen 106 in dafür im Innenbajonettring 32 vorgesehene Öffnungen 108 zur Verfügung gestellt.

Im Hinblick auf die Befestigung des Deckels 102 am Innenbajonettring 32 zeigt Figur 16 eine Variante. Hier greifen Laschen 106 nicht in Öffnungen 108 des Innenbajonettrings 32 ein. Vielmehr liegen diese in Nuten 114 des Innenbajonettrings 32. Diese Nuten 114 sind am Umfang des Innenbajonettringes so angeordnet, dass sie nicht mit den für die Bajonettfunktion erforderlichen Vorsprüngen interferieren.

Die Trockenmittelbox 56 gemäß Figur 12 hat einen grundsätzlich anderen Aufbau als die im Zusammenhang mit den Figuren 4, 5 und 9 beschriebenen Trockenmittelboxen 56. Während letztere ein viergängiges Labyrinth bilden, hat die Trockenmittelbox 56 gemäß Figur 12 keinen solchen labyrinthartigen Aufbau. Es ist zu bemerken, dass das geschlossene System gemäß Figur 12 ohne weiteres ebenfalls mit einer Trockenmittelbox 56 mit labyrinthartigen Aufbau, wie dieser in den Figuren 4, 5 und 9 gezeigt ist, kombinierbar ist. Gleiches gilt umgekehrt, denn für die offenen Systeme gemäß den Figuren 4, 5 und 9 ist die Verwendung labyrinthartiger Trockenmittelboxen nicht zwingend.

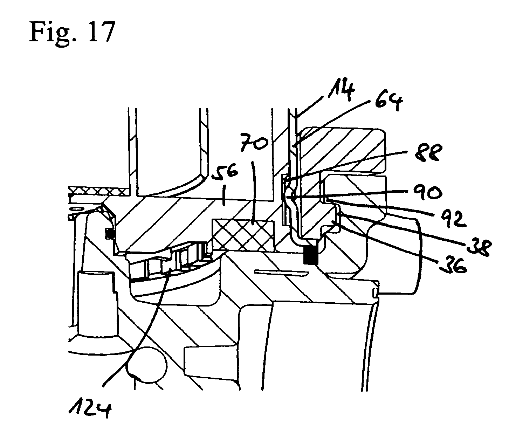

Figur 17 zeigt einen Teil einer Druckluftversorgungseinrichtung in geschnittener Darstellung. In dieser Darstellung ist die Verbindung zwischen dem Gehäuse 64 der Lufttrocknerpatrone 14 und der Trockenmittelbox 56 deutlich zu erkennen. Eine Rastnase 90 ist in einer Ausnehmung 88 angeordnet. Weiterhin sind Halter 124 zum Halten des Vorfilters 70 gezeigt.

Figur 18 zeigt einen Teil einer Trockenmittelbox 56 in perspektivischer Darstellung. Hier sind die Ausnehmungen 88 sowie die Halter 124 ebenfalls zu erkennen. Weiterhin erkennt man Bereiche 128, die gegenüber benachbarten Bereichen 130 einen vergrößerten Durchmesser aufweisen. Die Bereiche 128 liegen bei in das Gehäuse 64 der Lufttrocknerpatrone 14 eingesetzter Trockenmittelbox 56 an dem Gehäuse 64 an. Die Bereiche 130 dienen dann als Kanäle, um die Druckluft beim Einströmen in die Lufttrocknerpatrone 14 nach oben zu leiten.

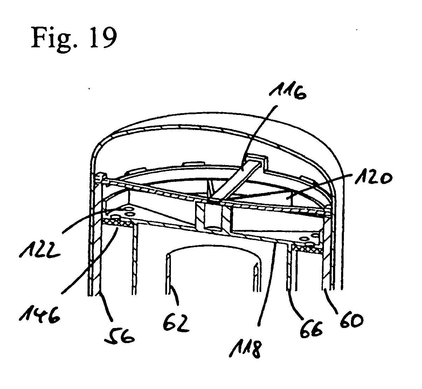

In Figur 19 zeigt eine perspektivische geschnittene Darstellung eines Teils einer Lufttrocknerpatrone. Eine Federeinrichtung 116 ist an der Trockenmittelbox 56 befestigt, wobei die Verbindung vorzugsweise spritztechnisch realisiert ist. Die Federeinrichtung 116 besteht aus zwei sich kreuzenden federnden Elementen, die in der Mitte der Anordnung miteinander verbunden sind. Dort beaufschlagen sie eine Kompressionseinrichtung 118 nach unten mit Kraft, um diese so in die Trockenmittelbox 56 hinein zu treiben. Alternativ könnte eine beispielsweise zentral angeordnete Spiralfeder vorgesehen sein, die sich am Gehäuse 64 der Lufttrocknerpatrone 14 abstützt. Die Kompressionseinrichtung 118 ist durch eine Mehrzahl von Stegen 120 stabilisiert, und sie weist Durchgangslöcher 122 auf, die einen Übertritt der oberhalb der Kompressionseinrichtung 118 anwesenden Luft in den Kanal zwischen dem äußeren Rohrstück 60, welches Bestandteil der Trockenmittelbox 56 ist, und dem Rohrstück 66 zu erlauben, das mit der Kompressionseinrichtung 118 in Verbindung steht. In diesem Kanal ist eingangsseitig ein Filter 146 angeordnet, das von der Luft bei ihrem Eintritt in den Kanal durchströmt wird.

Figur 20 zeigt eine Trockenmittelbox 56 in perspektivischer Darstellung. Diese Trockenmittelbox 56 kann beispielsweise bei den im Zusammenhang mit der anhand der Figuren 4 und 5 beschriebenen Ausführungsform der Druckluftversorgungseinrichtung 10 zum Einsatz kommen. In der zentralen Öffnung 132 der Trockenmittelbox 56 kann die in Figur 4 dargestellte Feder 58 eindringen, um die Trockenmittelbox 56 in Richtung der Lufttrocknerpatrone 14 mit Kraft zu beaufschlagen. Am Umfang der Trockenmittelbox 56 sind mehrere Federlaschen 134 angeordnet, die sich in das Gehäuse 64 der Lufttrocknerpatrone 14 einkrallen, und so ebenfalls eine axial nach oben gerichtete Kraft auf die Trockenmittelbox 56 ausüben. Bei geeigneter Auslegung der Federlaschen 134 kann auf die in die Öffnung 132 eindringende Feder 58 unter Umständen verzichtet werden, was den Zusammenbau der Druckluftversorgungseinrichtung 10 erleichtert. Im Bereich des Umfangs der Trockenmittelbox 56 ist eine Vielzahl von Öffnungen 136 vorgesehen, über die die Druckluft in das Trockenmittel einströmt. Innerhalb der Öffnung 132 ist eine Mehrzahl von Öffnungen 142 erkennbar, durch die Druckluft aus der Trockenmittelbox 56 ausströmen kann. Es sind weiterhin Halter 124 zum Halten des Vorfilters 70 zu erkennen. Weiter innen sind Rückschlagventile 138 angeordnet, über die die Trockenmittelbox gespült werden kann. Die Rückschlagventile liegen direkt unterhalb von dem mit Trockenmittel gefüllten Bereich, wobei vorzugsweise ein Filtervlies 68 die Rückschlagventile 138 gegen das Trockenmittel abschirmt. Die Trockenmittelbox 56 weist weiterhin eine Öffnung 140 auf. In diese Öffnung 140 dringt beim Aufsetzen der Lufttrocknerpatrone 14 auf das Ventilgehäuse 12 ein mit dem Ventilgehäuse in Verbindung stehender Zapfen ein. Dieser Zapfen dient zur Vorzentrierung der Lufttrocknerpatrone 14 relativ zum Ventilgehäuse 12 und zur Verdrehsicherung der Komponeten gegeneinander. Der Zapfen am Ventilgehäuse hat vorzugsweise eine solche Länge, dass dieser bei der Montage der Lufttrocknerpatrone 14 den ersten Kontakt zwischen dem Ventilgehäuse 12 und der Lufttrocknerpatrone 14 zur Verfügung stellt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

| | |
|---|---|
| 10 | Druckluftversorgungseinrichtung |
| 12 | Ventilgehäuse |
| 14 | Lufttrocknerpatrone |
| 16 | Bajonettverschluss |
| 18 | Kragen |
| 20 | Kragenabschnitt |
| 22 | Basis |
| 24 | Außenbajonettring |
| 28 | Ausnehmung |
| 30 | Dichtung |
| 32 | Innenbajonettring |
| 34 | Kragen |
| 36 | Vorsprung |
| 38 | Ausnehmung |
| 40 | Fußflansch |
| 42 | Sicherungselement |
| 44 | Öffnung |
| 46 | Öffnung |
| 48 | Nase |
| 50 | Feder |
| 52 | Eingang |
| 54 | Ausgang |
| 56 | Trockenmittelbox |
| 58 | Feder |
| 60 | äußeres Rohrstück |
| 62 | inneres Rohrstück |
| 64 | Gehäuse |
| 66 | Rohrstück |
| 68 | Filtervlies |
| 70 | Vorfilter |
| 72 | Kanal |
| 74 | Kanal |
| 76 | Dichtung |
| 78 | Kragen |
| 80 | Vorsprung |
| 82 | Dichtung |
| 84 | Sicherungselementhalter |
| 86 | gewellte Oberfläche |
| 88 | Ausnehmung |
| 90 | Rastnase |
| 92 | Vorsprung |
| 94 | Oberfläche |
| 96 | Anlaufschräge |
| 98 | Ansatz |
| 100 | Bohrung |
| 102 | Deckel |
| 104 | Bördelrand |
| 106 | Lasche |
| 108 | Öffnung |
| 110 | Radialdichtung |
| 112 | Trockenmittelbereich |
| 114 | Nut |
| 116 | Federeinrichtung |
| 118 | Kompressionseinrichtung |
| 120 | Steg |
| 122 | Durchgangsloch |
| 124 | Halter |
| 128 | Bereich |
| 130 | Bereich |
| 132 | Öffnung |
| 134 | Federlasche |
| 136 | Öffnung |
| 138 | Rückschlagventil |
| 140 | Öffnung |
| 142 | Öffnung |
| 144 | Dichtung |
| 146 | Filter |
| 210 | elektrisch ansteuerbares Ventil |
| 212 | pneumatisch ansteuerbares Ventil |
| 214 | elektronische Steuereinheit |
| 216 | Rückschlagventil |
| 218 | Drucksensor |
| 220 | Druckluftbehälter |
| 222 | elektrisch ansteuerbares Ablassventil |
| 224 | Kompressor |
| 226 | Steuereingang |
| 228 | erster Anschluss |
| 230 | zweiter Anschluss |
| 232 | Entlüftung |
| 234 | Steuereingang |
| 236 | weiterer Anschluss |
| 238 | weiterer Anschluss |
| 240 | Ventilteller |
| 242 | Feder |
| 244 | Steuerkolben |
| 246 | Ventilteller |
| 248 | Feder |
| 250 | Kolben |
| 252 | Ventilgehäuse |
| 254 | Dichtung |
| 256 | Dichtung |
| 258 | Dichtung |
| 260 | Feder |
| 262 | Rückraum |

## Patentansprüche

1. Druckluftversorgungseinrichtung (10) für ein Nutzfahrzeug, mit einem Ventilgehäuse (12) und einer Lufttrocknerpatrone (14), wobei der Lufttrocknerpatrone über das Ventilgehäuse Druckluft zuführbar ist, die die Lufttrocknerpatrone (14) in einer ersten Strömungsrichtung durchströmt, und wobei in dem Ventilgehäuse (12) ein elektrisch ansteuerbares Ventil (210) vorgesehen ist, durch das zum Zwecke der Regeneration der Lufttrocknerpatrone (14) eine Rückströmung von Druckluft durch die Lufttrocknerpatrone (14) entgegen der ersten Strömungsrichtung veranlassbar ist, **dadurch gekennzeichnet,**
- **dass** in dem Ventilgehäuse (12) ein durch das elektrisch ansteuerbare Ventil (210) pneumatisch ansteuerbares Ventil (212) vorgesehen ist, über das der Lufttrocknerpatrone (14) Druckluft zum Zwecke der Regeneration zuführbar ist, und
- **dass** die Lufttrocknerpatrone eine Trockenmittelbox (56) umfasst, die eine Basis (22) aufweist, an dem ein äußeres Rohrstück (60) und ein inneres Rohrstück (62) angeordnet sind, die an ihrer der Basis (22) abgewandten Seite offen sind, und dass zwischen dem äußeren Rohrstück (60) und dem inneren Rohrstück (62) ein weiteres Rohrstück (66) angeordnet ist, welches an seiner der Basis zugewandten Seite offen und durch eine elastische Einrichtung (58, 116, 134) relativ zu der Trockenmittelbox (56) in axialer Richtung verschiebbar ist.

2. Druckluftversorgungseinrichtung (10) nach Anspruch 1, **dadurch gekennzeichnet, dass** das elektrisch ansteuerbare Ventil ein 3/2-Wegeventil (210) ist.

3. Druckluftversorgungseinrichtung (10) nach Anspruch 1 oder 2, **dadurch gekennzeichnet, dass** das pneumatisch ansteuerbare Ventil ein 2/2-Wegeventil (212) ist.

4. Druckluftversorgungseinrichtung nach einem der vorhergehenden Ansprüche, **dadurch gekennzeichnet, dass** das Trockenmittel in der Trockenmittelbox (56) durch die elastische Einrichtung (58, 116, 134) komprimierbar ist.

5. Druckluftversorgungseinrichtung nach einem der vorhergehenden Ansprüche, **dadurch gekennzeichnet, dass** das Gehäuse (64) der Lufttrocknerpatrone (14), das äußere Rohrstück (60), das weitere Rohrstück (66) und das innere Rohrstück (62) ein Labyrinth bilden, das von zu trocknender Druckluft unter dreifacher Umkehr der Strömungsrichtung durchströmbar ist.

6. Druckluftversorgungseinrichtung nach einem der vorhergehenden Ansprüche, **dadurch gekennzeichnet, dass** die Trockenmittelbox (56) mit dem Ventilgehäuse (12) über eine radiale Dichtung (76) abdichtend zusammenwirkt.

7. Druckluftversorgungseinrichtung nach einem der vorhergehenden Ansprüche, **dadurch gekennzeichnet, dass** die Trockenmittelbox mit einem Fußflansch (40) der Lufttrocknerpatrone (14) über eine radiale Dichtung (110) abdichtend zusammenwirkt.

## Claims

1. Compressed air supply device (10) for a commercial vehicle, with a valve housing (12) and with an air drier cartridge (14), the air drier cartridge being capable of being supplied via the valve housing with compressed air which flows through the air drier cartridge in a first flow direction, and there being provided in the valve housing an electrically activated valve (210), by means of which a backflow of compressed air through the air drier cartridge (14) opposite to the first flow direction can be induced for the purpose of regenerating the air drier cartridge (14), **characterised in that**
- there is provided in the valve housing (12) a valve (212) which can be activated pneumatically by the electrically activated valve (210) and via which the air drier cartridge (14) can be supplied with compressed air for regeneration purposes, and
- the air drier cartridge comprises a desiccant box (56) which has a base (22) on which are arranged an outer tubular piece (60) and an inner tubular piece (62) which are open on their side facing away from the base (22), and **in that**, between the outer tubular piece (60) and the inner tubular piece (62), a further tubular piece (66) is arranged, which is open on its side facing the base and which is displaceable in the axial direction in relation to the desiccant box (56) by means of an elastic device (58, 116, 134).

2. Compressed air supply device (10) according to claim 1, **characterised in that** the electrically activated valve is a 3/2-way valve (210).

3. Compressed air supply device (10) according to claim 1 or 2, **characterised in that** the pneumatically activated valve is a 2/2-way valve (212).

4. Compressed air supply device according to any of the preceding claims, **characterised in that** the desiccant in the desiccant box (56) can be compressed by the elastic device (58, 116, 134).

5. Compressed air supply device according to any of the preceding claims, **characterised in that** the the housing (64) of the air drier cartridge (14), the outer tubular piece (60), the further tubular piece (66) and the inner tubular piece (62) form a labyrinth through which compressed air to be dried can flow, along with a threefold reversal of the flow direction.

6. Compressed air supply device according to any of the preceding claims, **characterised in that** the the desiccant box (56) cooperates with the valve housing (12) via a radial seal (76) while forming a seal.

7. Compressed air supply device according to any of the preceding claims, **characterised in that** the the desiccant box cooperates with a foot flange (40) of the air drier cartridge via a radial seal (110) while forming a seal.

## Revendications

1. Dispositif (10) d'alimentation en air comprimé pour un véhicule utilitaire, comprenant un corps (12) de vanne et une cartouche (14) de dessiccateur d'air, de l'air comprimé pouvant être amené à la cartouche de dessiccateur d'air par le corps de vanne, l'air comprimé passant dans la cartouche (14) de dessiccateur d'air suivant un premier sens d'écoulement, et dans lequel il est prévu dans le corps (12) de vanne une vanne (210) qui peut être commandée électriquement et par laquelle, en vue de la régénération de la cartouche (14) de dessiccateur d'air, il peut être provoqué un contre courant d'air comprimé dans la cartouche (14) de dessiccateur d'air en sens contraire au premier sens d'écoulement, **caractérisé**
- **en ce que** il est prévu dans le corps (12) de vanne, une vanne (212) qui peut être commandée pneumatiquement par la vanne (210) pouvant être commandée électriquement et par laquelle de l'air comprimé peut être amené en vue de la régénération à la cartouche (14) de dessiccateur d'air, et
- **en ce que** la cartouche de dessiccateur d'air comprend une boîte (56) d'agent de dessiccation, qui a une base (22), sur laquelle sont montées une tubulure (60) extérieure et une tubulure (62) intérieure, qui sont ouvertes du côté éloigné à la base (22), et en ce qu'entre la tubulure (60) extérieure et la tubulure (62) intérieure est montée une autre tubulure (66), qui est ouverte du côté tourné vers la base et qui peut être déplacée en direction axiale par rapport à la boîte (56) d'agent de dessiccation par un dispositif (58, 116, 134) élastique.

2. Dispositif (10) d'alimentation en air comprimé suivant la revendication 1, **caractérisé en ce que** la vanne pouvant être commandée électriquement est une vanne (210) à 3/2 voies.

3. Dispositif (10) d'alimentation en air comprimé suivant la revendication 1 ou 2, **caractérisé en ce que** la vanne pouvant être commandée pneumatiquement est une vanne (212) à 2/2 voies.

4. Dispositif d'alimentation en air comprimé suivant l'une des revendications précédentes, **caractérisé en ce que** l'agent de dessiccation dans la boîte (56) d'agent de dessiccation peut être comprimé par le dispositif (58, 116, 134) élastique.

5. Dispositif d'alimentation en air comprimé suivant l'une des revendications précédentes, **caractérisé en ce que** le boîtier (64) de la cartouche (14) de dessiccateur d'air, la tubulure (60) extérieure, l'autre tubulure (66) et la tubulure (62) intérieure forment un labyrinthe qui peut être parcouru par l'air comprimé à sécher, avec triple inversion du sens de l'écoulement.

6. Dispositif d'alimentation en air comprimé suivant l'une des revendications précédentes, **caractérisé en ce que** la boîte (56) d'agent de dessiccation coopère de manière étanche avec le corps (12) de vanne par un joint (76) radial.

7. Dispositif d'alimentation en air comprimé suivant l'une des revendications précédentes, **caractérisé en ce que** la boîte d'agent de dessiccation coopère de manière étanche avec une bride (40) de pied de la cartouche (14) de dessiccateur d'air par un joint (110) radial.
